(19) **Europäisches Patentamt / European Patent Office / Office européen des brevets**

(11) **EP 4 489 147 A1**

(12) **EUROPEAN PATENT APPLICATION**
published in accordance with Art. 153(4) EPC

(43) Date of publication:
**08.01.2025 Bulletin 2025/02**

(21) Application number: **23763456.3**

(22) Date of filing: **28.02.2023**

(51) International Patent Classification (IPC):
**H01M 4/86** *(2006.01)*  **B01J 23/89** *(2006.01)*
**B01J 35/02** *(2006.01)*  **B01J 35/10** *(2006.01)*
**B01J 37/02** *(2006.01)*  **B01J 37/18** *(2006.01)*
**H01M 4/88** *(2006.01)*  **H01M 4/90** *(2006.01)*
**H01M 4/92** *(2006.01)*  **H01M 8/10** *(2016.01)*

(52) Cooperative Patent Classification (CPC):
**B01J 23/89; B01J 35/60; B01J 37/02; B01J 37/18; H01M 4/86; H01M 4/88; H01M 4/90; H01M 4/92; H01M 8/10;** Y02E 60/50

(86) International application number:
**PCT/JP2023/007378**

(87) International publication number:
**WO 2023/167199 (07.09.2023 Gazette 2023/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.03.2022 JP 2022031316**

(71) Applicant: **Mitsui Mining & Smelting Co., Ltd.**
**Shinagawa-ku**
**Tokyo 141-8584 (JP)**

(72) Inventors:
• **NAKAHARA, Yuunosuke**
 **Ageo-shi, Saitama 362-0021 (JP)**

• **SATO, Jun**
 **Ageo-shi, Saitama 362-0021 (JP)**
• **KITABATAKE, Takuya**
 **Ageo-shi, Saitama 362-0021 (JP)**
• **KOMANOYA, Tasuku**
 **Ageo-shi, Saitama 362-0021 (JP)**
• **FUJINO, Takaaki**
 **Ageo-shi, Saitama 362-0021 (JP)**

(74) Representative: **Novagraaf Technologies**
**Bâtiment O2**
**2, rue Sarah Bernhardt**
**CS90017**
**92665 Asnières-sur-Seine Cedex (FR)**

(54) **ELECTRODE CATALYST, METHOD FOR PRODUCING SAME, AND FUEL CELL**

(57) An electrode catalyst includes a mesoporous carbon support having pores, and catalyst metal particles supported in at least some of the pores of the support. The catalyst metal particles are constituted by an alloy of platinum and at least one transition metal selected from Groups 3 to 12 elements of the periodic table. An average degree of alloying of the electrode catalyst calculated by Equation (1) below is 40% or more. A ratio r/R of a mean particle size r of the catalyst metal particles to a modal pore size R of the mesoporous carbon support is from 0.20 to 0.95.

Degree (%) of alloying = [lattice constant of alloy calculated from XRD - lattice constant of platinum] / [theoretical value of lattice constant of alloy - lattice constant of platinum] $\times$ 100    (1)

**EP 4 489 147 A1**

## Fig. 2

Inside of carbon support particle

## Description

Technical Field

The present invention relates to an electrode catalyst and a method for producing the same. Also, the present invention relates to a fuel cell.

Background Art

In electrochemical cells such as solid polymer fuel cells and water electrolysis apparatuses, a catalyst-supporting support in which a noble metal catalyst such as platinum is supported on a support is used as an electrode catalyst. From the viewpoint of improving the catalytic activity of the electrode catalyst, a carbonaceous material that is a material with a large specific surface area is often used as the catalyst support.

For example, Patent Literatures 1 and 2 propose use of a porous carbon material as the catalyst support, wherein catalyst particles are supported in pores of the porous carbon material. According to these literatures, as a result of the catalyst particles being supported in the pores, the catalyst is unlikely to come into contact with an ionomer, and poisoning of the catalyst by the ionomer is thus reduced. Further, Patent Literature 2 proposes alloy particles constituted by platinum and cobalt as catalyst particles.

Citation List

Patent Literature

Patent Literature 1: WO 2014/175099
Patent Literature 2: US 2020/075964A1

Summary of Invention

From the viewpoint of improving the catalytic activity, it is generally preferred to use a noble metal, particularly platinum, as a catalyst. On the other hand, since platinum is a rare metal, there is a problem that the use of platinum results in high cost, and it has been attempted to use an alloy of platinum and an inexpensive metal as a catalyst.

The inventors of the present invention studied electrode catalysts in which an alloy is supported on a porous carbon material, and found that catalyst particles with a high degree of alloying are not supported in pores of the porous carbon material, and there is room for improvement for higher catalytic activity.

Therefore, it is an object of the present invention to provide an electrode catalyst with higher catalytic activity than conventional electrode catalysts, a method for producing the same, and a fuel cell using the same.

The present invention is directed to an electrode catalyst comprising:

a mesoporous carbon support having pores; and
catalyst metal particles supported in at least some of the pores of the support,

wherein the catalyst metal particles comprise an alloy comprising: platinum; and at least one transition metal selected from Groups 3 to 12 elements of the periodic table,
an average degree of alloying of the catalyst metal particles calculated by Equation (1) below is 40% or more, and
a ratio r/R of a mean particle size r of the catalyst metal particles to a modal pore size R of the mesoporous carbon support is from 0.20 to 0.95, Degree (%) of alloying = [lattice constant of alloy calculated from XRD - lattice constant of platinum] / [theoretical value of lattice constant of alloy - lattice constant of platinum] $\times$ 100    (1).

The present invention is further directed to a method for producing an electrode catalyst, including:

passing a pressurized fluid through a mixture containing a mesoporous carbon support having pores and a catalyst metal source compound to obtain an intermediate in which the catalyst metal source compound is supported in the pores of the mesoporous carbon support; and

heating the intermediate at a temperature of 400 to 930°C in a hydrogen-containing atmosphere to generate catalyst metal particles from the catalyst metal source compound.

Brief Description of Drawings

[Fig. 1] Fig. 1 is a scanning electron microscope image of the vicinity of the surface of a carbon support particle in a cut face of an electrode catalyst obtained in Example 1.
[Fig. 2] Fig. 2 is a scanning electron microscope image of the inside of a carbon support particle in a cut face of the electrode catalyst obtained in Example 1.

Description of Embodiment

Hereinafter, the present invention will be described based on a preferred embodiment thereof. The present invention relates to an electrode catalyst. The electrode catalyst of the present invention includes a support and catalyst metal particles supported on the support. The electrode catalyst of the present invention can be suitably used in, for example, electrodes of various types of fuel cells. Specifically, the electrode catalyst of the present invention can be used in an anode electrode catalyst layer and/or a cathode electrode catalyst layer of a solid polymer fuel cell or a phosphoric acid fuel cell. Alternatively, the electrode catalyst of the present invention can be used in an anode electrode catalyst layer and/or a cathode electrode catalyst layer of a water electrolysis apparatus. However, the use of the electrode catalyst of the present invention is not limited thereto.

The electrode catalyst support is constituted by particles of a mesoporous structure having pores. The mesoporous structure is preferably a porous structure having mesoscale pores, that is, pores with a modal pore size of 2 to 50 nm in terms of diameter. As a result of having mesoscale pores, the support has an increased surface area, and thus catalyst metal particles smaller than the pore size can be favorably supported in the pores. A preferred method for measuring the pore size will be described in Examples, which will be described later.

The pores formed in the support are open at the surface of the support and extend into the interior of the support. The support has a plurality of pores formed therein. The pores may be open at the surface of the support and terminate in the interior of the support. That is to say, the pores may be non-through holes. Alternatively, the pores may be open at the surface of the support at one end, extend through the interior of the support, and also be open at the surface of the support at the other end. That is to say, the pores may be through holes.

Preferably, a support containing carbon, in particular, a support containing carbon as the main component, is used as the support. The wording "containing carbon as the main component" means that the proportion of carbon in the support is 50 mass% or more. Use of a support containing carbon advantageously improves electron conductivity of the support and decreases electric resistance.

Examples of the carbon above include a group of carbonaceous materials called carbon black. Specifically, Ketjen black (registered trademark), oil furnace black, channel black, lamp black, thermal black, acetylene black, and the like may be used. In addition, activated carbon and graphite may also be used as the carbon. In the present invention, there is no particular limitation on the type of the carbon material, and an intended effect can be achieved regardless of the type of carbon material used.

Furthermore, from the viewpoint of improving the conductivity or improving the interaction between the support and the catalyst metal particles, the carbon material doped with an element such as nitrogen or boron may also be used.

The catalyst metal particles are present in some or all of the pores of the support. Preferably, the catalyst metal particles are present at least inside the pores of the support. It is not precluded that the catalyst metal particles are present on the outer surface of the support, in addition to inside the pores.

The catalyst metal particles supported on the support comprises an alloy comprising platinum and a transition metal, that is, a platinum-based alloy. The platinum-based alloy is an alloy in which the proportion of the number of platinum atoms is the highest among the proportions of the respective constituent elements in the total number of atoms of all the elements constituting the catalyst metal particles.

If a platinum-based alloy is used for the catalyst metal particles, it is possible to economically realize a catalytic activity of the same level as when platinum itself is used. In particular, when the electrode catalyst of the present invention is used in a fuel cell and a reformed gas is used as a fuel gas, the use of a platinum-based alloy is effective in preventing poisoning by CO.

The transition metal forming the alloy comprises at least one selected from the elements of Groups 3 to 12 of the periodic table (excluding platinum). It is preferable to use a transition metal whose alloy with platinum exhibits high catalytic acttivity. Examples of such a transition metal include Sc and Y as elements of Group 3. Examples thereof further include Ti, Zr, and Hf as elements of Group 4. Examples thereof further include V, Nb, and Ta as elements of Group 5. Examples thereof further include Cr, Mo, and W as elements of Group 6. Examples thereof further include Mn and Re as elements of Group 7. Examples thereof further include Fe and Ru as elements of Group 8. Examples thereof further include Co, Rh, and Ir as elements of Group 9. Examples thereof further include Ni and Pd as elements of Group 10. Examples thereof further include Cu, Ag, and Au as elements of Group 11. Examples thereof further include Zn as elements of Group 12.

Among the above-listed transition metals, elements belonging to Periods 4 and 5 are preferable from the viewpoint of high catalytic activity, and elements of Groups 8 to 11 and belonging to Period 4 or 5 are more preferable. These transition metals may be used alone or in a combination of two or more. Particularly preferred transition metals are one or at least two elements selected from the group consisting of Co, Ni, Cu, Ru, and Pd, from the viewpoint of the balance between the high catalytic activity and the economic efficiency.

The homogeneity of the alloy of the platinum element and the transition metal element in the catalyst metal particles can be expressed by an average degree of alloying. The average degree of alloying is a value represented by Equation (1) below, and a larger value indicates that the platinum atoms and the transition metal atoms are homogeneously solid-solved to form alloy particles.

The lattice constant in Equation (1) can be calculated by obtaining an interplanar spacing value d calculated by the Bragg's equation represented by Equation (2) below from the peak position of the diffraction peak of the (111) plane of the cubic crystal of platinum or a platinum-based alloy appearing at 2θ of about 40° in the X-ray diffraction pattern which is the relationship between the diffraction angle 2θ and the diffraction intensity of X-rays measured by powder X-ray diffractometry, and calculating the relational expression between the interplanar spacing value d and a lattice constant a of the cubic crystal represented by Equation (3) below.

The theoretical value of the lattice constant of the alloy can be calculated based on the Vegard's rule represented by Equation (4) below.

The values of the lattice constants of platinum and the additive element can be referred to Non-Patent Literatures 1 to 4 below.

In the present invention, the average degree of alloying of the catalyst metal particles is 40% or more, and preferably from 40 to 150% from the viewpoint of the balance between the high catalytic activity and the economic efficiency. From this viewpoint, the average degree of alloying of the catalyst metal particles is more preferably from 40 to 135%, even more preferably from 40 to 100%, even more preferably from 55 to 100%, and even more preferably from 65 to 100%.

Degree (%) of alloying = [lattice constant of alloy calculated from XRD - lattice constant of platinum] / [theoretical value of lattice constant of alloy - lattice constant of platinum] × 100 (1)

$$2d\sin\theta = n\lambda \qquad (2)$$

(where d is a crystal interplanar spacing (nm), θ is a diffraction angle (°), n is an integer, and λ is an X-ray wavelength (nm))

$$1/d^2 = (h^2 + k^2 + l^2)/a^2 \qquad (3)$$

(where h, k, and l are Miller indices of the crystal, and a is a lattice constant) Theoretical value (%) of lattice constant of alloy = [lattice constant of platinum] × [mole fraction of platinum] + [lattice constant of additive element 1] × [mole fraction of additive element 1] + [lattice constant of additive element 2] × [mole fraction of additive element 2] ... + [lattice constant of additive element n] × [mole fraction of additive element n] (4)

(where n is a value obtained by subtracting Pt from type of the element contained in the alloy)

Non-Patent Literature 1: Masahiko Morinaga, "11 - Local Lattice Strains Around Alloying Elements in Metals", A Quantum Approach to Alloy Design, 2019, 221-260
Non-Patent Literature 2: Klaus Hermann, "Crystallography and Surface Structure: An Introduction for Surface Scientists and Nanoscientists", 2011
Non-Patent Literature 3: Okkyun Seo et al., "Stacking fault density and bond orientational order of fcc ruthenium nanoparticles", Applied Physics Letters 111, 2017, 253101
Non-Patent Literature 4: Sondes Bauer et al., "Structure Quality of LuFeO3 Epitaxial Layers Grown by Pulsed-Laser Deposition on Sapphire/Pt", Materials, 2020, 13, 61

In the present invention, it is preferable that a modal pore size R of the pores formed in the support and a mean particle size r of the catalyst metal particles supported in the pores have a specific relationship. Specifically, a value of r/R, which is a ratio of the mean particle size r of the catalyst metal particles to the modal pore size R of the pores, is preferably 0.20 or more from the viewpoint of increasing the catalytic activity of the catalyst metal particles supported in the pores. From the viewpoint of making this advantage more remarkable, the value of r/R is more preferably 0.50 or more, and even more preferably 0.60 or more.

In addition, the value of r/R is preferably 0.95 or less from the viewpoint of effective utilization of the surface of the catalyst metal particles. From the viewpoint of making this advantage more remarkable, the value of r/R is more preferably 0.90 or less, and even more preferably 0.85 or less. These upper limits may be combined with any of the lower limits mentioned above.

Technologies for causing catalyst particles to be supported in pores of a porous support have previously been known in the art. However, the relationship between the modal pore size R of pores and the mean particle size r of catalyst metal particles supported in the pores has not been investigated so far. In particular, it was first discovered by the inventors of the present invention that an electrode catalyst with high activity and suppressed poisoning by an ionomer can be obtained by setting the ratio between the modal pore size R and the mean particle size r to a specific range to balance the exposure ratio of crystal planes with high catalytic activity for an oxygen reduction reaction, effective utilization of the surface of the catalyst metal particles, and the diffusibility of oxygen in the pores.

While the ratio between the modal pore size R of the pores and the mean particle size r of the catalyst metal particles is as described above, the value of the modal pore size R itself of the pores is preferably 3.0 nm or more from the viewpoint of allowing the catalyst particles to be efficiently supported in the pores and effectively utilizing the entire surfaces of the catalyst particles supported in the pores. From the viewpoint of making this advantage more remarkable, the value of the modal pore size R is more preferably 3.5 nm or more, and even more preferably 4.0 nm or more.

In addition, the value of the modal pore size R of the pores is preferably 30.0 nm or less from the viewpoint of suppressing the contact between the catalyst metal particles and the ionomer. From the viewpoint of making this advantage more remarkable, the value of the modal pore size R is more preferably 20.0 nm or less, even more preferably 15.0 nm or less, and even more preferably 10.0 nm or less. These upper limits may be combined with any of the lower limits mentioned above.

A preferred method for measuring the modal pore size R of the pores will be described in Examples, which will be described later.

Meanwhile, the value of the mean particle size r of the catalyst metal particles is preferably 10.0 nm or less from the viewpoint of increasing the initial activity of the electrode catalyst. From the viewpoint of making this advantage more remarkable, the value of the mean particle size r is more preferably 7.0 nm or less, even more preferably 5.0 nm or less, and even more preferably 4.5 nm or less.

The lower limit of the mean particle size r of the catalyst metal particles is not particularly limited because the smaller the value, the larger the specific surface area. As described in Non-Patent Literature 5 below, it is known that when catalyst metal particles are alloy particles of platinum and a transition metal, the presence of platinum element on the outermost surface of the alloy particles is effective for improving the catalytic activity. From this viewpoint, the size is more preferably 1 nm or more, which is a size that allows formation of a core-shell structure having a platinum shell layer on the surfaces thereof.

Examples of the method for measuring the mean particle size r of the catalyst metal particles include a method using an X-ray diffractometer and transmission electron microscope observation. From the viewpoint of increasing the measurement accuracy, when the mean particle size r is more than 5 nm, it is preferable to adopt a method using an X-ray diffractometer. A specific measurement method will be described in Examples, which will be described later.

Non-Patent Literature 5: Chao Wang, "Design and Synthesis of Bimetallic Electrocatalyst with Multilayered Pt-Skin Surfaces", Journal of the American Chemical Society, 2011, 14396-14403

In the electrode catalyst, the amount of catalyst metal particles supported is preferably from 10 to 60 mass%, and more preferably from 30 to 50 mass%, with respect to the mass of the support, from the viewpoint of exhibiting sufficient catalytic activity.

In the electrode catalyst, the support in a particle form preferably has a mean particle size D of 50 $\mu$m or less from the viewpoint of increasing the effective surface area of the support and improving the catalytic activity. From this viewpoint, the mean particle size D of the support is more preferably 20 $\mu$m or less, and even more preferably 10 $\mu$m or less.

In addition, the mean particle size D of the support is preferably 0.05 $\mu$m or more from the viewpoint of sufficiently forming pores in the support. From this viewpoint, the mean particle size D of the support is more preferably 0.1 $\mu$m or more, and even more preferably 0.2 $\mu$m or more.

The mean particle size D of the support is measured by observing the support under an electron microscope or by using a particle size distribution analyzer.

Note that, since the mean particle size r of the catalyst metal particles is sufficiently smaller than the mean particle size D of the support, the mean particle size of the electrode catalyst in which the catalyst metal particles are supported on the support can be regarded as substantially the same as the mean particle size D of the support.

Next, a preferred method for producing the electrode catalyst of the present invention will be described.

First, a support, which is one of the raw materials of the electrode catalyst, that is, a mesoporous carbon support having pores is prepared.

A catalyst metal source compound, which also is one of the raw materials of the electrode catalyst, is prepared along with the support. As the platinum source in the catalyst metal source compound, chloroplatinic acid hexahydrate ($H_2PtCl_6 \cdot 6H_2O$), dinitrodiammine platinum ($Pt(NH_3)_2(NO_2)_2$), and the like can be used. These platinum sources can be used in the form of powder or in the form of an aqueous solution.

The transition metal source in the catalyst metal source compound is appropriately selected according to the type of alloy to be formed with platinum. As the transition metal source, for example, nitrates such as nickel nitrate ($Ni(NO_3)_2$), copper nitrate ($Cu(NO_3)_2$), cobalt nitrate ($Co(NO_3)_2$), and ruthenium nitrate ($Ru(NO_3)_3$) can be used. These transition metal sources can be used in the form of powder or in the form of an aqueous solution.

In addition to the support and the catalyst metal source compound described above, a solvent is also prepared which acts to facilitate the dissolution of the transition metal source in a pressurized fluid. Examples of the solvent include alcohols; aromatic hydrocarbons such as toluene and benzene; aliphatic hydrocarbons such as hexane; and other various organic solvents such as ketones, esters; ethers.

Examples of the organic solvents include acetonitrile, benzene, toluene, methanol, acetone, ethyl acetate, and nitromethane. Among these organic solvents, acetone is preferably used from the viewpoint of achieving a good balance between ease of handling and high solubility.

After the above-mentioned raw materials are prepared, these three raw materials are mixed to obtain a dispersion liquid. The proportion of the support in the dispersion liquid is preferably set to 0.5 to 10% by mass with respect to the solvent, from the viewpoint of allowing the catalyst metal particles to be favorably supported on the support.

The proportion of the catalyst metal source compound in the dispersion liquid can be set to an appropriate value in accordance with the amount of the catalyst metal particles to be supported and the concentration of metal contained in the catalyst metal source compound to be used.

After the preparation of the dispersion liquid is completed, a pressurized fluid is passed through the dispersion liquid to allow the platinum source and the transition metal source in the dispersion liquid to permeate into the pores of the support. That is to say, a pressurized fluid is passed through a mixture containing the mesoporous carbon support and the catalyst metal source compound. In this case, the platinum source and the transition metal source can more easily permeate into the pores by bringing the fluid into a supercritical state or a subcritical state and utilizing the high diffusibility and solubility of the fluid. From this viewpoint, it is preferable to use a substance capable of realizing a critical state at a relatively low temperature and a relatively low pressure as the fluid. Examples of such a substance include carbon dioxide ($CO_2$) and nitrogen ($N_2$). In particular, carbon dioxide is preferable because it easily permeates into the microstructure due to its density close to that of a liquid, high dissolving power, and viscosity and diffusion coefficients close to those of a gas, in a critical condition thereof (critical temperature: 31.1°C, critical pressure: 7.38 MPa). In addition, carbon dioxide has an advantage that the separation after mixing can be efficiently performed because the solubility of carbon dioxide is greatly changed by only a slight change in pressure and/or temperature.

The pressurized fluid is passed through the dispersion liquid under appropriate conditions selected according to the type of fluid used. From the viewpoint of allowing the platinum source and the transition metal source in the dispersion liquid to favorably permeate into the pores of the support, for example, when carbon dioxide is used as the fluid, the pressure in the system is set to preferably 7 to 30 MPa, and more preferably 8 to 20 MPa. In this case, the temperature in the system is set to preferably 30 to 80°C, and more preferably 35 to 60°C, from the viewpoint of bringing carbon dioxide into a supercritical state or a subcritical state.

After the dispersion liquid is subjected to pressurization treatment, the dispersion liquid is subjected to depressurization treatment to normal pressure. The depressurization treatment changes the fluid in the supercritical state to a gaseous state, and the fluid is removed from the dispersion liquid. The fluid is removed from the surface of the mesoporous carbon support as well as from the pores in the support.

When the dispersion liquid is subjected to depressurization treatment, most of the organic solvent among the components contained in the dispersion liquid is removed from the support by volatilization. In contrast, the platinum source and the transition metal source contained in the dispersion liquid remain in the support.

After the dispersion liquid is subjected to depressurization treatment, the dispersion liquid is subjected to drying treatment. The drying treatment removes the organic solvent that has not been removed from the dispersion liquid by the depressurization treatment. The temperature of the drying treatment is not particularly limited as long as the organic solvent can be removed from the support. In the thus obtained intermediate, the platinum source and the transition metal source are present in the pores of the support and on the outer surface of the support.

After the intermediate is obtained, the intermediate is heated to reduce the platinum source and the transition metal source, thereby generating alloy particles containing platinum and the transition metal, that is, catalyst metal particles. As described above, the platinum source and the transition metal source have permeated into the pores of the support, and therefore, the generation of catalyst metal particles through the reduction of the platinum source and the transition metal source occurs in the pores. The generation of catalyst metal particles occurs not only in the pores but also on the outer surface of the support.

The growth of the catalyst metal particles generated in the pores is restricted by the pores, and the particles can only grow to a diameter corresponding to the size of the pores. That is to say, the pores function as a "frame" for growth of the catalyst metal particles. As a result, the catalyst metal particles do not become too large, and a specific relationship is established between the mean particle size r of the generated catalyst metal particles and the mean pore size R of the pores.

The heating of the intermediate is preferably performed in a hydrogen-containing atmosphere because the support is less likely to be damaged by heating. Examples of the reducing gas atmosphere for use in heating include an atmosphere of 100% hydrogen gas and an inert gas atmosphere containing hydrogen gas (e.g., a nitrogen gas atmosphere containing hydrogen gas at a concentration lower than the explosion limit concentration). The inert gas is a gas of an element that does not have chemical reactivity with the catalyst metal particles and the support particles, and examples thereof include nitrogen, helium, argon, krypton, and the like.

The heating time and temperature of the intermediate are appropriately set according to the atmosphere. For example, the heating temperature is preferably set to a temperature of 400 to 930°C from the viewpoint of favorably adjusting the particle size of the catalyst metal particles to a desired value. From a similar viewpoint, the heating temperature is more preferably from 620 to 930°C, even more preferably from 620 to 900°C, and even more preferably from 650 to 850°C. The heating time is preferably from 1 to 24 hours, and more preferably from 2 to 6 hours, provided that the heating temperature is within the above-mentioned range.

After the electrode catalyst is obtained in this manner, leaching is preferably performed to remove a trace amount of impurities present on the surface of the catalyst metal particles and activate the surface of the catalyst metal particles. Leaching is generally achieved by acid treatment of the electrode catalyst. Through the acid treatment, a trace amount of impurities present on the surface of the catalyst metal particles are eluted and removed. Examples of the acid for use in leaching include perchloric acid, nitric acid, sulfuric acid, hydrochloric acid, and hydrogen peroxide. The acid has a concentration of preferably 0.1 to 5 mol/L, and more preferably 0.5 to 3 mol/L.

The leaching can be performed in a state in which a slurry obtained by dispersing the electrode catalyst in the aqueous solution of the above-mentioned acid is heated. Alternatively, the leaching can be performed without heating. When the leaching is performed under heating, the slurry can be heated preferably to 40 to 90°C. The leaching time can be, for example, 0.5 to 24 hours.

The electrode catalyst after leaching may be subjected to post-treatment. For example, the electrode catalyst may be heated to adjust the particle size of the catalyst metal particles. The particle size can be increased by growing the catalyst metal particles through heating. Heating is preferably performed in a reducing gas atmosphere or an inert gas atmosphere as described above, because the support is less likely to be damaged by heating. Note that the inventors of the present invention confirmed that heat treatment of the electrode catalyst does not cause any substantial change in the mesoporous structure of the support.

The electrode catalyst obtained in this manner can be used to form an electrode catalyst layer in a fuel cell. In addition to the electrode catalyst, the electrode catalyst layer may also contain materials similar to those conventionally known in the art, such as a binding agent that binds electrode catalyst particles together, an ionomer, and the like, as necessary.

The ionomer is preferably proton conductive. As a result of the electrode catalyst layer containing an ionomer, the performance of the catalyst layer is further improved. As the ionomer, for example, it is possible to use a polymer material that has a structure in which a perfluoroether pendant side chain with a sulfonic acid group at a terminal thereof is linked to a polytetrafluoroethylene main chain. Examples of the ionomer include Nafion (registered trademark), Flemion (registered trademark), Aciplex (registered trademark), Fumion F (registered trademark), and the like.

The electrode catalyst layer can be suitably formed using the following method, for example. First, a dispersion liquid containing the electrode catalyst is prepared. To prepare the dispersion liquid, the electrode catalyst is mixed with a solvent. When mixing, an ionomer may also be added if necessary.

As the solvent used for dispersion, for example, alcohols, aromatic hydrocarbons such as toluene and benzene, aliphatic hydrocarbons such as hexane, other organic solvents such as ketones, esters, and ethers, and water can be used.

After the dispersion liquid is obtained, an electrode catalyst layer is formed from the dispersion liquid. The electrode catalyst layer is formed by, for example, applying the dispersion liquid to an application object using any type of application apparatus to form a coating film, and drying the coating film. As the application object, for example, a film of fluorine resin such as polytetrafluoroethylene, or the like can be used. The electrode catalyst layer formed on the application object is overlaid on, for example, a solid electrolyte membrane and then heat-pressed, so that the electrode catalyst layer is transferred onto the surface of the solid electrolyte membrane. As a result of the transfer, a CCM in which the electrode catalyst layer is disposed on the surface of the solid electrolyte membrane is obtained.

The electrode catalyst layer formed in this manner can be suitably used as an electrode catalyst layer of an anode and/or a cathode of a solid polymer fuel cell. Preferably, the anode and the cathode each include the electrode catalyst layer and a gas diffusion layer. The gas diffusion layer functions as a support and current collector that has a current-collecting function. Furthermore, the gas diffusion layer has the function of sufficiently supplying a gas to the electrode catalyst layer.

As the gas diffusion layer, for example, a porous material such as carbon paper or carbon cloth can be used. Specifically, for example, a carbon cloth obtained by weaving a thread made of a carbon fiber with its surface coated with polytetrafluoroethylene and a carbon fiber without the coating at a predetermined proportion can be used.

Examples of the solid electrolyte membrane include a perfluorosulfonic acid polymer-based proton conductive membrane, a hydrocarbon polymer compound doped with an inorganic acid such as phosphoric acid, an organic/inorganic hybrid polymer partially substituted with a functional group of a proton conductor, a proton conductor obtained by impregnating a polymer matrix with a phosphoric acid solution or a sulfuric acid solution, and the like.

A separator is placed on each surface of a membrane electrode assembly that includes the electrode catalyst layer, the solid electrolyte membrane, and the gas diffusion layer, and thus a solid polymer fuel cell is obtained. For example, a separator in which a plurality of protruding portions (ribs) extending in one direction are formed at predetermined intervals on a surface opposing the gas diffusion layer can be used as the separator. Groove portions having a rectangular cross-sectional shape are formed between adjacent protruding portions. The groove portions are used as flow channels for supplying and discharging a fuel gas and an oxidant gas such as air. The fuel gas and the oxidant gas are supplied from a fuel gas supply means and an oxidant gas supply means, respectively. The separators placed on the respective surfaces of the membrane electrode assembly are preferably arranged such that the groove portions formed in one of the separators are orthogonal to the groove portions formed in the other separator. The structural element described above constitutes a minimum unit of a fuel cell, and a fuel cell can be produced from a cell stack in which several tens or several hundreds of structural elements are arranged in parallel.

With respect to the foregoing embodiments, the present invention further discloses an electrode catalyst, a method for producing the same, and a fuel cell as follows.

[1] An electrode catalyst comprising:

a mesoporous carbon support having pores; and
catalyst metal particles supported in at least some of the pores of the support,

wherein the catalyst metal particles comprise an alloy comprising: platinum; and at least one transition metal selected from Groups 3 to 12 elements of the periodic table,
an average degree of alloying of the catalyst metal particles calculated by Equation (1) below is 40% or more, and
a ratio r/R of a mean particle size r of the catalyst metal particles to a modal pore size R of the mesoporous carbon support is from 0.20 to 0.95, Degree (%) of alloying = [lattice constant of alloy calculated from XRD - lattice constant of platinum] / [theoretical value of lattice constant of alloy - lattice constant of platinum] $\times$ 100        (1).

[2] The electrode catalyst as set forth in [1], wherein the mean particle size of the catalyst metal particles is 10.0 nm or less.

[3] The electrode catalyst as set forth in [1] or [2], wherein the modal pore size R of the mesoporous carbon support is from 3.0 to 30.0 nm.

[4] An electrode catalyst layer for a fuel cell, including the electrode catalyst as set forth in any one of [1] to [3].

[5] A fuel cell including the electrode catalyst layer for a fuel cell as set forth in [4].

[6] A method for producing an electrode catalyst, including:

passing a pressurized fluid through a mixture containing a mesoporous carbon support having pores and a catalyst metal source compound to obtain an intermediate in which the catalyst metal source compound is supported in the pores of the mesoporous carbon support; and
heating the intermediate at a temperature of 400 to 930°C in a hydrogen-containing atmosphere to generate catalyst metal particles from the catalyst metal source compound.

[7] The production method as set forth in [6], wherein a carbon dioxide fluid at a pressure of 7 to 30 MPa is passed through the mixture of the mesoporous carbon support having pores and the catalyst metal source compound.

Examples

Hereinafter, the present invention will be described in further detail by way of examples. However, the scope of the present invention is not limited to the examples below. Unless otherwise specified, "%" and "parts" mean "% by mass" and "parts by mass", respectively.

Example 1

(1) Preparation of Dispersion Liquid

A mesoporous carbon support having a modal pore size R shown in Table 1 was prepared. A dispersion liquid was prepared by mixing 1.8% of the mesoporous carbon support, 10.9% of dinitrodiammine platinum nitrate solution (platinum concentration: 15.234%), and 0.8% of nickel nitrate hexahydrate, together with acetone for dissolving these components such that the mass of the catalyst particles was 100% with respect to the mesoporous carbon support and the molar ratio between the catalyst metals was Pt:Ni = 3:1.

(2) Pressurization, Depressurization, and Drying Treatment of Dispersion Liquid

The dispersion liquid was placed in a sealed container, heated to 40°C while passing carbon dioxide through the sealed container to bring the dispersion liquid into a supercritical state at 10 MPa (absolute pressure), and this state was maintained for 60 minutes. Thereafter, the sealed container was depressurized to create a reduced pressure state therein, that is, to a normal pressure. This gave a solid concentration of the dispersion liquid of about 80%. The dispersion liquid was further vacuum-dried at 40°C for 2 hours to remove acetone contained in the dispersion liquid.

(3) Reduction Treatment

The dispersion liquid was heated at 825°C for 3 hours in a nitrogen atmosphere containing 4 vol% of hydrogen to reduce dinitrodiammine platinum nitrate and nickel nitrate, thereby generating alloy particles of platinum and nickel in the pores of the mesoporous carbon support and obtaining an electrode catalyst.

Example 2

The following steps were added after the reduction treatment (3) in Example 1. An electrode catalyst was obtained in the same way as that of Example 1, except for the above.

(4) Leaching Treatment

The electrode catalyst was dispersed in 500 mL of 2 mol/L nitric acid solution, and the mixture was stirred under heating at 60°C for 18 hours. Thereafter, the dispersion liquid was subjected to solid-liquid separation, and the solids were washed and dried.

(5) Reduction Treatment

The electrode catalyst was heated at 200°C for 3 hours in a nitrogen atmosphere containing 4 vol% of hydrogen to activate the catalyst metal particles. A target electrode catalyst was obtained in this manner.

Example 3

In Example 2, the amount of the catalyst metal source was adjusted such that the molar ratio between the catalyst metals was Pt:Ni = 1:1. An electrode catalyst was obtained in the same way as that of Example 2, except for the above.

Example 4

In Example 2, the amount of the catalyst metal source was adjusted such that the molar ratio between the catalyst metals was Pt:Ni = 3:4. An electrode catalyst was obtained in the same way as that of Example 2, except for the above.

Example 5

In Example 2, copper nitrate trihydrate was used instead of nickel nitrate hexahydrate as the transition metal source, and the molar ratio between the catalyst metals was adjusted to Pt:Cu = 3:1. An electrode catalyst was obtained in the same way as that of Example 2, except for the above.

Example 6

In Example 2, cobalt nitrate hexahydrate was used instead of nickel nitrate hexahydrate as the transition metal source, and the molar ratio between the catalyst metals was adjusted to Pt:Co = 3:1. An electrode catalyst was obtained in the same way as that of Example 1, except for the above.

Example 7

In Example 2, ruthenium nitrate solution (ruthenium concentration: 8.16%) was used instead of nickel nitrate hexahydrate as the metal source, and the molar ratio between the catalyst metals was adjusted to Pt:Ru = 3:1. An electrode catalyst was obtained in the same way as that of Example 2, except for the above.

Example 8

In Example 2, ruthenium nitrate solution (ruthenium concentration: 8.16%) was additionally used as the transition metal source, and the molar ratio between the catalyst metals was adjusted to Pt:Ni:Ru = 3:1:0.26. An electrode catalyst was obtained in the same way as that of Example 2, except for the above.

Example 9

In Example 8, the molar ratio between the catalyst metals was adjusted to Pt:Ni:Ru = 3:1:0.39. An electrode catalyst was obtained in the same way as that of Example 8, except for the above.

Example 10

In Example 8, the molar ratio between the catalyst metals was adjusted to Pt:Ni:Ru = 3:1:0.52. An electrode catalyst was obtained in the same way as that of Example 8, except for the above.

Example 11

In Example 8, the molar ratio between the catalyst metals was adjusted to Pt:Ni:Ru = 3: 1:0.65. An electrode catalyst was obtained in the same way as that of Example 8, except for the above.

Example 12

In Example 2, copper nitrate trihydrate was additionally used as the catalyst metal source, and the molar ratio between the catalyst metals was adjusted to Pt:Ni:Cu = 3: 1:0.26. An electrode catalyst was obtained in the same way as that of Example 2, except for the above.

Example 13

In Example 2, palladium nitrate solution (palladium concentration: 5.05 mg/ml) was additionally used as the catalyst metal source, and the molar ratio between the catalyst metals was adjusted to Pt:Ni:Pd = 3: 1:0.26. An electrode catalyst was obtained in the same way as that of Example 2, except for the above.

Example 14

An electrode catalyst was obtained in the same way as that of Example 1, except that a mesoporous carbon support having a modal pore size R shown in Table 1 was used.

Example 15

An electrode catalyst was obtained in the same way as that of Example 1, except that a mesoporous carbon support having a modal pore size R shown in Table 1 was used.

Comparative Example 1

In Example 1, catalyst particles constituted by platinum were generated using only dinitrodiammine platinum nitrate, without using the transition metal source. An electrode catalyst was obtained in the same way as that of Example 1, except for the above.

Comparative Example 2

As the electrode catalyst, TEC10E50E, which is an electrode catalyst for solid polymer fuel cells manufactured by Tanaka Kikinzoku Kogyo K. K., was used.

Comparative Example 3

The temperature in the reduction treatment (3) in Example 1 was changed to 400°C. An electrode catalyst was obtained in the same way as that of Example 1, except for the above.

Comparative Example 4

The temperature in the reduction treatment (3) in Example 1 was changed to 600°C. An electrode catalyst was obtained in the same way as that of Example 1, except for the above.

Comparative Example 5

The temperature in the reduction treatment (3) in Example 1 was changed to 950°C. An electrode catalyst was obtained in the same way as that of Example 1, except for the above.

Comparative Example 6

An electrode catalyst was obtained in the same way as that of Example 1, except that a mesoporous carbon support having a modal pore size R shown in Table 1 was used.

Comparative Example 7

Instead of the mesoporous carbon support, non-mesoporous carbon, which is a carbon support having no pore was used. An electrode catalyst was obtained in the same way as that of Example 1, except for the above.

Comparative Example 8

(1) Preparation of Dispersion Liquid

A mesoporous carbon support with a modal pore size R of 4.0 nm was prepared. A dispersion liquid was prepared by mixing 0.9% of the mesoporous carbon support, 1.7% of platinum(II) acetylacetonate, 0.8% of nickel(II) acetylacetonate, and 12.3% of benzoic acid, together with benzyl alcohol for dissolving these components such that the mass of the catalyst particles was 100% with respect to the mesoporous carbon support and the molar ratio between the catalyst metals was Pt:Ni = 3:1.

(2) Freezing, Depressurization, and Thawing Treatment of Dispersion Liquid

A container containing the dispersion liquid was immersed in liquid nitrogen to freeze the dispersion liquid, thereby obtaining a frozen body. The frozen body was placed in a sealed container, and the sealed container was depressurized to create a reduced pressure state therein, that is, to an internal pressure of 100 Pa (absolute pressure). With use of running water and a constant temperature bath, the frozen body was thawed and returned to the state of a dispersion liquid. The temperature of the dispersion liquid was 30°C. It was confirmed that the dispersion liquid had permeated into the support based on the fact that the dispersion liquid stopped foaming during the thawing. This step was repeated until the dispersion liquid stopped foaming.

(3) Reduction Treatment

The dispersion liquid was heated to 140°C under reflux to reduce the catalyst metal raw material, thereby generating alloy catalyst particles of platinum and nickel. The catalyst particle dispersion liquid was subjected to solid-liquid separation, and the solids were washed and dried to obtain a dry powder. Thereafter, the obtained dry powder was heated at 825°C for 3 hours in a nitrogen atmosphere containing 4 vol% of hydrogen to obtain an electrode catalyst.

Evaluation

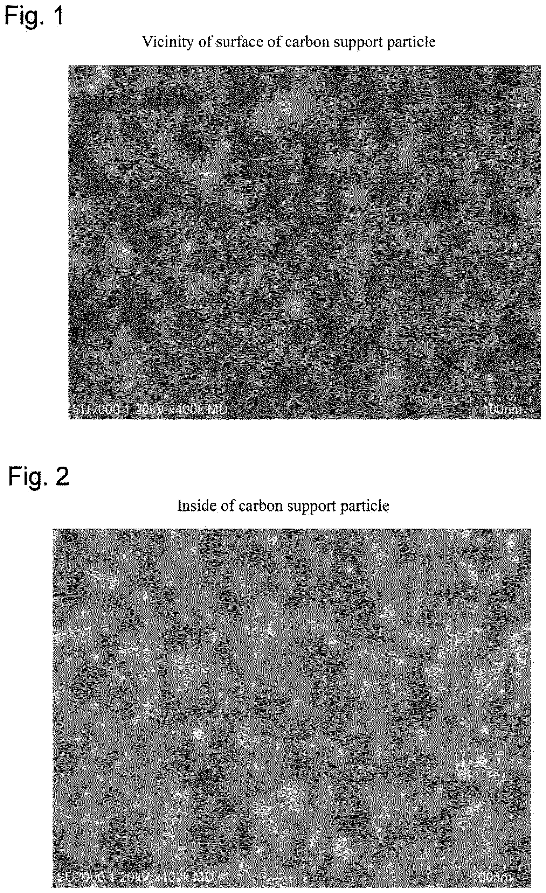

The mean particle size D and the modal pore size R of the carbon support used in each of the examples and the comparative examples were measured by the following methods.
Further, the average degree of alloying and the mean particle size r of the catalyst metal particles of the electrode catalyst obtained in each of the examples and the comparative examples were measured by the following methods.
Further, a fuel cell was produced using the electrode catalyst obtained in each of the examples and the comparative examples, and the mass specific activity (MA) was evaluated by the following method.
Table 1 below shows the results. Note that a value represented by "-" in the table means that a well-defined value was not obtained.
Further, the vicinity of the surface (the vicinity of the entrances of pores) and the inside of a carbon support particle in a cut face of the electrode catalyst obtained in Example 1 were observed with a scanning electron microscope. Figs. 1 and 2 show the observation results. In Figs. 1 and 2, the gray areas represent pores of the carbon support, and the white particles represent catalyst metal particles. It is seen from Figs. 1 and 2 that the catalyst metal particles were supported not only in the vicinity of the surface of the carbon support particle but also inside the pores of the carbon support particle. The cut face was observed by using a scanning electron microscope (SU7000 manufactured by Hitachi High-Technologies Corporation) on a cut face obtained by embedding the produced electrode catalyst layer in an epoxy resin and then cutting the layer with a microtome. The electrode catalyst layer was produced in the same manner as the electrode catalyst layer used in the mass specific activity evaluation described below. A diamond knife was selected as the microtome blade. The scanning electron microscopy was performed at an acceleration voltage of 1.2 kV and an observation magnification of 400,000 times.

Mean Particle Size D of Carbon Support

The particle size $D_{50}$ at 50% cumulative volume as measured by a laser diffraction-scattering particle size distribution measurement method (the measurement was performed using LS 13320 manufactured by Beckman Coulter, Inc.) was defined as the mean particle size D of the carbon support. Ethanol was used as a solvent for the measurement, and the carbon supports prepared in the respective examples and comparative examples were dispersed in the solvent, and the resulting suspensions were used for the measurement.

Modal Pore Size R of Carbon Support

The modal pore size R of the carbon support was measured by analyzing a nitrogen adsorption/desorption isotherm. Nitrogen adsorption/desorption measurement was performed using a gas adsorption measurement apparatus (3Flex manufactured by Micromeritics). As pre-treatment, the carbon support was heated at 400°C for 3 hours under conditions at a reduced pressure of 10 Pa. The obtained adsorption isotherm was analyzed using the BJH (Barrett-Joyner-Halenda) method, and the modal pore size R of the carbon support in the range of 2 to 50 nm was calculated. As analysis software, 3Flex version 5.02 attached to the gas adsorption measurement apparatus was used.
Note that the inventors of the present invention confirmed that the modal pore size R of the electrode catalyst was substantially the same as the modal pore size R of the carbon support before supporting the catalyst.

Mean Particle Size r of Catalyst Metal Particles

The electrode catalyst was filled in a dedicated glass holder, and the measurement was performed using an X-ray diffractometer (RINT-TTR III manufactured by Rigaku Corporation) with Cu K$\alpha$ rays generated by applying a voltage 50 kV and a current 300 mA under the conditions of a sampling angle of 0.02° and a scanning speed of 4.0°/min. The mean particle size r was determined by XRD analysis software JADE using the measurement results.

Degree of Alloying of Catalyst Metal Particles

As described above, the lattice constant of the catalyst metal particles was calculated using the interplanar spacing value d, and the degree of alloying was calculated using the obtained value. The interplanar spacing value d was calculated using an X-ray diffractometer (RINT-TTR III manufactured by Rigaku Corporation), with the integer n in the Bragg's equation being 1. The mole fractions of platinum and the additive element in the catalyst metal particles were determined by using the composition ratio obtained by evaluating the electrode catalyst obtained in each of the examples and the comparative examples using an ICP emission spectrometer (PS3520UVDD manufactured by Hitachi High-Tech Science Corporation). When calculating the theoretical value of the lattice constant of the alloy based on the Vegard's rule, the following values were used as the lattice constants of platinum and the additive element.

Lattice Constant of Each Element

Pt: 3.9232 Å
Co: 3.4855 Å
Ni: 3.5295 Å
Cu: 3.6258 Å
Ru: 3.8170 Å
Pd: 3.8900 Å

Evaluation of Mass Specific Activity (MA) by Evaluation of Unit Cell Power Generation Characteristics

(1) Dispersion Step

The electrode catalyst obtained in each of the examples and the comparative examples and yttrium-stabilized zirconia balls having a diameter of 1 mm (Vickers hardness: 12 GPa) were placed in a container, and pure water, ethanol, and 2-propanol were sequentially added as solvents at a mass ratio of 35:35:30. The thus obtained mixed liquid was stirred using a planetary ball mill (ARE310 manufactured by Thinky Corporation) at 800 rpm for 20 minutes. Further, 20% Nafion (registered trademark) (527122-100ML manufactured by Sigma-Aldrich) was added as an ionomer to the mixed liquid, and the mixture was stirred using the planetary ball mill in the same manner as described above. A value I/C, which is the ratio of the mass I of the ionomer to the mass C of the carbon support contained in the electrode catalyst, was set to 0.7. Thus, a dispersion liquid was obtained.

(2) Electrode Catalyst Layer Forming Step

The thus obtained dispersion liquid was applied onto a polytetrafluoroethylene sheet using a bar coater, and the coating film was dried at 60°C to obtain an electrode catalyst layer. A solid polymer fuel cell was produced using the thus obtained electrode catalyst layer, and the cell voltage was measured. The electrode catalyst layer obtained in each of the examples and the comparative examples was used as a cathode electrode catalyst layer. An anode electrode catalyst layer was obtained by the following method. That is, 1.00 g of platinum support carbon black (TEC10E50E) manufactured by Tanaka Kikinzoku Kogyo K. K. and yttrium-stabilized zirconia balls having a diameter of 10 mm were placed in a container, and pure water, ethanol, and 2-propanol were sequentially added at a mass ratio of 45:35:20 (10.2 g, as a mixed liquid). The thus obtained mixed liquid was stirred using a planetary ball mill (ARE310 manufactured by Thinky Corporation) at 800 rpm for 20 minutes. Further, 5% Nafion (registered trademark) (274704-100ML manufactured by Sigma-Aldrich) was added as an ionomer to the mixed liquid, and the mixture was stirred using the planetary ball mill in the same manner as described above. The amount of Nafion added was such that the mass ratio of Nafion/platinum support carbon black was 70.0. The thus obtained dispersion liquid was applied onto a polytetrafluoroethylene sheet using a bar coater, and the coating film was dried at 60°C.

(3) CCM Step

The cathode and anode electrode catalyst layers formed on the polytetrafluoroethylene sheet were cut into a 10 mm square, and the cut pieces were overlaid on an electrolyte membrane constituted by Nafion (registered trademark) (NRE-211 manufactured by Du-Pont) and then heat-pressed in the atmosphere for 2 minutes under the conditions of 140°C and 25 kgf/cm$^2$, so that the electrode catalyst layers were transferred onto the electrolyte membrane. In this manner, the cathode and anode electrode catalyst layers were formed on the respective surfaces of the solid electrolyte membrane constituted by Nafion, and thus a CCM was obtained. At this time, the amount of Pt (g-Pt/cm$^2$) in the transferred cathode electrode catalyst layer was calculated from the difference in weight between the polytetrafluoroethylene substrate and the catalyst layer before transfer and the polytetrafluoroethylene after transfer, and the Pt support rate (wt%) in the electrode catalyst obtained in each of the examples and the comparative examples.

(4) Evaluation of Power Generation Characteristics

The obtained CCM was sandwiched between a pair of gas diffusion layers (model number: 22BB manufactured by SGL Carbon). The resulting assembly was further sandwiched between a pair of carbon plate separators having gas flow channels formed therein, thereby producing a solid polymer fuel cell.
Hydrogen gas was supplied to the anode side of the solid polymer fuel cell, and air gas was supplied to the cathode side. The flow rate of the hydrogen gas was set to 0.3 SLM, and the flow rate of the air gas was set to 1.0 SLM. The gases were humidified by an external humidifier and then supplied to the fuel cell. The temperature of the fuel cell was controlled to be 80°C, and the humidity of the supplied gas was controlled to a relative humidity of 100%RH. The relationship between the cell voltage and the current density and the cell resistance at this time were measured. The IR free voltage was calculated from the obtained relationship between the cell voltage and the current density and the cell resistance, and the current density value (A/cm$^2$) at which the IR free voltage was 0.85 V was calculated. The mass specific activity (MA) (A/g-Pt), which is the amount of current flowing through 1 g of Pt, was obtained from the obtained current density value and the amount of Pt (g-Pt/cm$^2$) in the cathode electrode catalyst layer in the CCM. Table 1 below shows the results.

Table 1

| | | Carbon support | | | Catalyst metal particle | | | Electrode catalyst | Activity test |
|---|---|---|---|---|---|---|---|---|---|
| | | Material | Modal pore size R (nm) | Mean particle size D (μm) | Metal type | Mean particle size r (nm) | Degree (%) of alloying | r/R | Mass specific activity MA (A/g-Pt) @ 0.85 V |
| Ex. 1 | | Mesoporous carbon | 4.0 | 1.4 | Pt$_3$Ni | 3.0 | 74.0 | 0.75 | 372 |
| Ex. 2 | | Mesoporous carbon | 4.0 | 1.4 | Pt$_3$Ni | 2.6 | 53.9 | 0.65 | 381 |
| Ex. 3 | | Mesoporous carbon | 4.0 | 1.4 | PtNi | 2.6 | 59.2 | 0.64 | 395 |
| Ex. 4 | | Mesoporous carbon | 4.0 | 1.4 | Pt$_3$Ni$_4$ | 2.6 | 49.8 | 0.65 | 358 |
| Ex. 5 | | Mesoporous carbon | 4.0 | 1.4 | Pt$_3$Cu | 3.1 | 85.0 | 0.76 | 420 |
| Ex. 6 | | Mesoporous carbon | 4.0 | 1.4 | Pt$_3$Co | 2.7 | 83.0 | 0.67 | 389 |
| Ex. 7 | | Mesoporous carbon | 4.0 | 1.4 | Pt$_3$Ru | 2.9 | > 99 | 0.73 | 487 |
| Ex. 8 | | Mesoporous carbon | 4.0 | 1.4 | Pt$_3$NiRu$_{0.26}$ | 2.9 | 79.6 | 0.73 | 444 |

(continued)

| | Carbon support | | | Catalyst metal particle | | | Electrode catalyst | Activity test |
|---|---|---|---|---|---|---|---|---|
| | Material | Modal pore size R (nm) | Mean particle size D ($\mu$m) | Metal type | Mean particle size r (nm) | Degree (%) of alloying | r/R | Mass specific activity MA (A/g-Pt) @ 0.85 V |
| Ex. 9 | Mesoporous carbon | 4.0 | 1.4 | $Pt_3NiRu_{0.39}$ | 2.8 | 89.4 | 0.69 | 527 |
| Ex. 10 | Mesoporous carbon | 4.0 | 1.4 | $Pt_3NiRu_{0.52}$ | 2.8 | 69.1 | 0.69 | 567 |
| Ex. 11 | Mesoporous carbon | 4.0 | 1.4 | $Pt_3NiRu_{0.65}$ | 3.0 | 82.5 | 0.74 | 623 |
| Ex. 12 | Mesoporous carbon | 4.0 | 1.4 | $Pt_3NiCu_{0.26}$ | 2.7 | 68.0 | 0.68 | 361 |
| Ex. 13 | Mesoporous carbon | 4.0 | 1.4 | $Pt_3NiPd_{0.26}$ | 3.3 | 98.3 | 0.82 | 377 |
| Ex. 14 | Mesoporous carbon | 7.4 | 5.9 | $Pt_3Ni$ | 3.5 | 80.3 | 0.47 | 318 |
| Ex. 15 | Mesoporous carbon | 17 | 7.4 | $Pt_3Ni$ | 6.0 | 91.3 | 0.35 | 415 |
| Com.Ex. 1 | Mesoporous carbon | 4.0 | 1.4 | Pt | 2.8 | - | 0.70 | 263 |
| Com.Ex. 2 | TEC10E50E (commercially available) | - | 0.2 | Pt | 2.5 | - | - | 256 |
| Com.Ex. 3 | Mesoporous carbon | 4.0 | 1.4 | $Pt_3Ni$ | 2.1 | 21.4 | 0.51 | 251 |
| Com.Ex. 4 | Mesoporous carbon | 4.0 | 1.4 | $Pt_3Ni$ | 2.1 | 32.8 | 0.52 | 231 |
| Com.Ex. 5 | Mesoporous carbon | 4.0 | 1.4 | $Pt_3Ni$ | 4.1 | 83.1 | 1.03 | 310 |
| Com.Ex. 6 | Mesoporous carbon | 31.2 | 4.2 | $Pt_3Ni$ | 4.1 | 72.0 | 0.13 | 85 |
| Com.Ex. 7 | Non-mesoporous carbon | - | 0.1 | $Pt_3Ni$ | 10.5 | 94.1 | - | 96 |
| Com.Ex. 8 | Mesoporous carbon | 4.0 | 1.4 | $Pt_3Ni$ | 4.0 | 80.3 | 0.99 | 241 |

As is clear from the results shown in Figs. 1 and 2, the electrode catalyst obtained in Example 1 had the catalyst metal particles supported not only in the vicinity of the surface of the electrode catalyst but also inside the pores.

Also, as is clear from the results shown in Table 1, the electrode catalysts obtained in the examples had a higher degree of alloying of the catalyst metal particles and exhibited higher catalytic activity than the electrode catalysts obtained in the comparative examples.

Industrial Applicability

The present invention provides an electrode catalyst with higher catalytic activity than conventional electrode catalysts. The present invention further provides a method for easily producing such an electrode catalyst.

**Claims**

1.  An electrode catalyst comprising:

    a mesoporous carbon support having pores; and
    catalyst metal particles supported in at least some of the pores of the support,

    wherein the catalyst metal particles comprise an alloy comprising: platinum; and at least one transition metal selected from Groups 3 to 12 elements of the periodic table,
    an average degree of alloying of the catalyst metal particles calculated by Equation (1) below is 40% or more, and
    a ratio r/R of a mean particle size r of the catalyst metal particles to a modal pore size R of the mesoporous carbon support is from 0.20 to 0.95, Degree (%) of alloying = [lattice constant of alloy calculated from XRD - lattice constant of platinum] / [theoretical value of lattice constant of alloy - lattice constant of platinum] $\times$ 100       (1).

2.  The electrode catalyst according to claim 1, wherein the mean particle size of the catalyst metal particles is 10.0 nm or less.

3.  The electrode catalyst according to claim 1 or 2, wherein the modal pore size R of the mesoporous carbon support is from 3.0 to 30.0 nm.

4.  An electrode catalyst layer for a fuel cell, comprising the electrode catalyst according to claim 1 or 2.

5.  A fuel cell comprising the electrode catalyst layer for a fuel cell according to claim 4.

6.  A method for producing an electrode catalyst, comprising:

    passing a pressurized fluid through a mixture containing a mesoporous carbon support having pores and a catalyst metal source compound to obtain an intermediate in which the catalyst metal source compound is supported in the pores of the mesoporous carbon support; and
    heating the intermediate at a temperature of 400 to 930°C in a hydrogen-containing atmosphere to generate catalyst metal particles from the catalyst metal source compound.

7.  The production method according to claim 6, wherein a carbon dioxide fluid at a pressure of 7 to 30 MPa is passed through the mixture of the mesoporous carbon support having pores and the catalyst metal source compound.

Fig. 1

Vicinity of surface of carbon support particle

Fig. 2

Inside of carbon support particle

## INTERNATIONAL SEARCH REPORT

International application No.

**PCT/JP2023/007378**

### A. CLASSIFICATION OF SUBJECT MATTER

*H01M 4/86*(2006.01)i; *B01J 23/89*(2006.01)i; *B01J 35/02*(2006.01)i; *B01J 35/10*(2006.01)i; *B01J 37/02*(2006.01)i; *B01J 37/18*(2006.01)i; *H01M 4/88*(2006.01)i; *H01M 4/90*(2006.01)i; *H01M 4/92*(2006.01)i; *H01M 8/10*(2016.01)i
FI:   H01M4/86 M; H01M4/86 B; H01M4/88 K; H01M4/90 M; H01M4/92; H01M8/10 101; B01J23/89 M; B01J35/02 H; B01J35/10 301G; B01J37/02 101C; B01J37/18

According to International Patent Classification (IPC) or to both national classification and IPC

### B. FIELDS SEARCHED

Minimum documentation searched (classification system followed by classification symbols)

H01M4/86; B01J23/89; B01J35/02; B01J35/10; B01J37/02; B01J37/18; H01M4/88; H01M4/90; H01M4/92; H01M8/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2021-150249 A (NE CHEMCAT CORP.) 27 September 2021 (2021-09-27) claim 1, paragraphs [0033]-[0035], [0061]-[0068], [0073], table 2, fig. 2 | 1-7 |
| A | JP 2007-311354 A (SAMSUNG SDI CO., LTD.) 29 November 2007 (2007-11-29) paragraphs [0073]-[0077] | 1-7 |
| A | JP 2020-171917 A (NIPPON STEEL CORP.) 22 October 2020 (2020-10-22) claims 15, 18, paragraphs [0013], [0096], [0097], [0110]-[0112], [0128]-[0131], tables 1-1A (examples 1-1), tables 1, 2 (examples 1-1), tables 2-1A (examples 2-9), tables 3-1A (examples 2-9) | 1-7 |
| A | JP 2012-91109 A (NE CHEMCAT CORP.) 17 May 2012 (2012-05-17) claim 1, paragraphs [0015], [0016], [0021], [0044]-[0048], table 5 | 1-7 |
| P, A | WO 2022/181261 A1 (MITSUI MINING & SMELTING CO., LTD.) 01 September 2022 (2022-09-01) claims | 1-7 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 April 2023** | **16 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/007378**

| Patent document cited in search report | | | Publication date (day/month/year) | Patent family member(s) | Publication date (day/month/year) |
|---|---|---|---|---|---|
| JP | 2021-150249 | A | 27 September 2021 | (Family: none) | |
| JP | 2007-311354 | A | 29 November 2007 | US 2007/0269699 A1 paragraphs [0082]-[0085] KR 10-0738062 B1 CN 101222049 A | |
| JP | 2020-171917 | A | 22 October 2020 | (Family: none) | |
| JP | 2012-91109 | A | 17 May 2012 | US 2013/0177839 A1 claim 1, paragraphs [0029], [0020], [0033], [0053]-[0060], table 5 WO 2012/057226 A1 EP 2633906 A1 CA 2815957 A | |
| WO | 2022/181261 | A1 | 01 September 2022 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014175099 A

- US 2020075964 A1

**Non-patent literature cited in the description**

- **MASAHIKO MORINAGA**. 11 - Local Lattice Strains Around Alloying Elements in Metals. *A Quantum Approach to Alloy Design*, 2019, 221-260
- **KLAUS HERMANN**. *Crystallography and Surface Structure: An Introduction for Surface Scientists and Nanoscientists*, 2011
- **OKKYUN SEO et al.** Stacking fault density and bond orientational order of fcc ruthenium nanoparticles. *Applied Physics Letters*, 2017, vol. 111, 253101

- **SONDES BAUER et al.** Structure Quality of LuFeO3 Epitaxial Layers Grown by Pulsed-Laser Deposition on Sapphire/Pt. *Materials*, 2020, vol. 13, 61
- **CHAO WANG**. Design and Synthesis of Bimetallic Electrocatalyst with Multilayered Pt-Skin Surfaces. *Journal of the American Chemical Society*, 2011, 14396-14403